# EUROPEAN PATENT SPECIFICATION

(11) **EP 2 848 352 B1**
(45) Date of publication and mention of the grant of the patent: **09.09.2020**
(21) Application number: 13787442.6
(22) Date of filing: 11.04.2013
(51) Int. Cl.: B23K 9/167, B23K 9/32, B23K 9/173, B23K 10/02, B23K 26/14, B23K 103/02

(54) **WELDING METHOD, WELDING NOZZLE AND WELDING DEVICE**
SCHWEISSVERFAHREN, SCHWEISSDÜSE UND SCHWEISSVORRICHTUNG
PROCÉDÉ DE SOUDAGE, BUSE DE SOUDAGE ET DISPOSITIF DE SOUDAGE

(30) Priority: 11.05.2012 JP 2012109955
(43) Date of publication of application: 18.03.2015
(73) Proprietor: Osaka University, Suita-shi, Osaka 565-0871 (JP)
(72) Inventor: FUJII Hidetoshi, Suita-shi Osaka 565-0871 (JP); MORISADA Yoshiaki, Suita-shi Osaka 565-0871 (JP)
(74) Representative: Mewburn Ellis LLP
(86) International application number: PCT/JP2013/060965
(87) International publication number: WO 2013/168513

(56) References cited:
- JP-A- S62 212 074
- JP-A- S63 192 570
- JP-A- 2008 264 818
- MORISADA YOSHIAKI ET AL: "Development of simplified active flux tungsten inert gas welding for deep penetration", MATERIALS AND DESIGN, vol. 54, 30 August 2013 (2013-08-30), pages 526-530, XP028774405, ISSN: 0261-3069, DOI: 10.1016/J.MATDES.2013.08.081

## Description

### Technical Field

One embodiment of the present invention relates to a welding method, a welding nozzle and a welding device, and relates to a welding method, a welding nozzle and a welding device that supply inert gas onto a surface of a metallic material.

### Background Technology

Since tungsten inert gas (TIG) welding is high in surface quality and provides fewer defects of welding, it is used for welding of precision apparatuses and high-pressure pipes. However, the TIG welding has defects where depth of penetration of a molten pool is shallow and a welding efficiency is low. It is known that it is possible to deepen the depth of penetration by introducing oxygen into the molten pool. However, when oxygen is introduced into the molten pool, a problem where a tungsten electrode is easily consumed with that oxygen occurs. Then, in Patent Literature 1 below, a technology of double shielded TIG welding to be doubly surrounded with an inner nozzle surrounding a side of a tungsten electrode and an outer nozzle surrounding a side of the inner nozzle and to separately distribute gas to the nozzles, respectively, is disclosed. In the technology of Patent Literature 1, a dual gas supply system with Ar gas and O₂ gas is prepared. Since Ar gas is distributed within the inner nozzle and mixed gas of Ar gas and O₂ gas is distributed between the inner nozzle and the outer nozzle, while consumption of a tungsten electrode due to oxygen is prevented, oxygen is introduced into a molten pool and the depth of penetration is deepened.

### PRIOR ART DOCUMENT

### Patent Literature

Patent Literature 1: Japanese Patent Application Laid-Open No. 2004-298963 JP2008-264818-A proposes non-consumable electrode type welding equipment. JP63-192570-A proposes a cap for an arc torch.

### SUMMARY OF THE INVENTION

### Problem to be Solved by the Invention

However, in the technology above, a dual gas supply system with Ar gas and O₂ gas, and a special welding torch compatible with the dual gas supply system are required. Consequently, there are defects that the gas supply system and the welding torch become complicated and expensive. Further, since the dual gas supply system is required, there is a defect that gas for welding becomes expensive.

The present invention has been accomplished in light of the problem above, and the objective is to provide an arc welding method, a nozzle for arc welding and an arc welding device where oxygen is introduced into a molten pool with a simple technique to further deepen depth of penetration of the molten pool, and a welding efficiency is enhanced.

One aspect of the present invention is a welding method according to claim 1.

According to this configuration, in the welding method where the inert gas is supplied onto the surface of the metallic material from the inside of the cylindrical welding nozzle, and the surface of the metallic material where the inert gas has been supplied by the welding nozzle is heated; oxygen in the atmosphere that has been suctioned due to a reduction in pressure generated in association with a flow of the inert gas is introduce into a molten pool generated on the surface of the metallic material. Consequently, even though a separate supply source of oxygen is not prepared as in the double shielded TIG welding, oxygen is introduced into the molten pool and depth of penetration of the molten pool is further deepened, and a weld efficiency can be enhanced.

According to this configuration, the welding nozzle has
the nozzle inner cylinder where the inert gas is distributed inside, and
the nozzle outer cylinder where the atmosphere that has been suctioned due to a reduction of pressure generated in association with a flow of the inert gas that is distributed in the nozzle inner cylinder is distributed to the gap with the nozzle inner cylinder while surrounding the side of the nozzle inner cylinder. Further, the inert gas is supplied to the metallic material from the inside of the nozzle inner cylinder, and while the atmosphere that has been suctioned due to a reduction of pressure generated in association with a flow of the inert gas that is distributed in the nozzle inner cylinder is distributed to the gap between the nozzle inner cylinder and the nozzle outer cylinder, oxygen in the atmosphere is introduced into a molten pool. Consequently, oxygen can be introduced into the molten pool only with the welding nozzle with this simple structure having the nozzle inner cylinder and the nozzle outer cylinder.

The amount of oxygen to be introduced in order to bring the molten pool into the ideal state varies depending upon the welding state. However, with this configuration, the welding nozzle has the gap variable unit that can adjust the size of the gap between the nozzle inner cylinder and the nozzle outer cylinder, and the amount of the atmosphere that is distributed in the gap between the nozzle inner cylinder and the nozzle outer cylinder is controlled by adjusting the size of the gap between the nozzle inner cylinder and the nozzle outer cylinder by the gap variable unit, and the amount of oxygen to be introduced into the molten pool is controlled. Consequently, the amount of oxygen to be introduced into the molten pool can be controlled by corresponding to various states of welding.

Further, the size of the gap between the nozzle inner cylinder and the nozzle outer cylinder can be greater than 1 mm but 5 mm or less.

If the size of the gap between the nozzle inner cylinder and the nozzle outer cylinder is greater than 1 mm, a reverse flow of the atmosphere that is distributed in the gap between the nozzle inner cylinder and the nozzle outer cylinder can be prevented. Further, if the size of the gap between the nozzle inner cylinder and the nozzle outer cylinder is 5 mm or less, a sufficient amount of the atmosphere can be distributed.

A second aspect of the present invention is a welding method according to claim 3.

According to this configuration, the welding nozzle has the atmosphere introduction hole parts that lead to the inside of the welding nozzle from the outside of the welding nozzle, and where the atmosphere that has been suctioned due to a reduction of pressure generated in association with a flow of the inert gas that is distributed within the welding nozzle is distributed, and while the atmosphere that has been suctioned due to a reduction of pressure generated in association with a flow of the inert gas that is distributed within the welding nozzle is distributed to the atmosphere introduction hole part, oxygen in the atmosphere is introduced into the molten pool. Consequently, oxygen can be introduced into the molten pool only with the welding nozzle with this simple structure having the atmosphere introduction hole parts.

The amount of oxygen to be introduced in order to bring the molten pool to the ideal state varies depending upon a welding state. However, with this configuration, the welding nozzle has the introduction hole variable unit that can adjust the size of the atmosphere introduction hole parts, and the amount of the atmosphere that is distributed in the atmosphere introduction hole parts is controlled by adjusting the size of the atmosphere introduction hole parts by the introduction hole variable unit, and the amount of oxygen to be introduced into the molten pool is controlled.

Further, a third aspect of the present invention is a welding nozzle according to claim 6.

Further, in the oxygen introduction step, oxygen in the atmosphere can be introduced into the molten pool so as to be 70 ppm to 300 ppm of the amount of oxygen in the molten pool.

In the oxygen introduction step, depth of penetration can be deepened further certainly by introducing oxygen in the atmosphere into the molten pool so as to be 70 ppm to 300 ppm of the amount of oxygen in the molten pool.

Further, in the inert gas supply step, the inert gas can be supplied at 1 to 9 LM of a flow rate of inert gas.

In the inert gas supply step, the depth of penetration of the molten pool can be deepened further certainly by supplying the inert gas at 1 to 9 LM of a flow rate of the inert gas.

Further, a fourth aspect of the present invention is the welding nozzle according to claim 8.

Further, one embodiment of the present invention is welding equipment, including:
the welding nozzle of the present invention,
a thermal source to heat the surface of the metallic material where inert gas has been supplied by the welding nozzle of the third or fourth aspect,
a molten pool monitoring unit that observes a molten pool, and
an oxygen introduction amount control unit that controls an amount of oxygen to be introduced into the molten pool by the gap variable unit of the welding nozzle of the third aspect or the introduction hole variable unit of the welding nozzle of the fourth aspect based upon a state of the molten pool monitored by the molten pool monitoring unit.

According to this configuration, the oxygen introduction amount control unit controls an amount of oxygen to be introduced into the molten pool by the gap variable unit of the welding nozzle of the present invention or the introduction hole variable unit of the welding nozzle of the present invention based upon a state of the molten pool monitored by the molten pool monitoring unit. Consequently, a more excellent molten pool can be obtained by controlling the amount of oxygen to be introduced into the molten pool based upon the state of the molten pool.

### Effect of the Invention

According to an arc welding method, an arc welding nozzle and an arc welding device of the present invention, it becomes possible to introduce oxygen into a molten pool with a simpler technique to further deepen depth of penetration of the molten pool, and to enhance a weld efficiency.

### BRIEF DESCRIPTION OF THE INVENTION

Fig. 1 is a perspective view showing a torch in the first comparative example.
Fig. 2 is a side view of the torch in Fig. 1.
Fig. 3 is a perspective view of a nozzle in the first comparative example.
Fig. 4 is a cross-sectional view at a Line IV in Fig. 3.
Fig. 5 shows air currents around the periphery of the nozzle on the occasion of introducing inert gas to the nozzle of the first comparative example.
Fig. 6 is a graph showing a relationship between temperature and surface tension of a molten pool under the inert gas atmosphere.
Fig. 7 shows shape of the molten pool and flowage of molten metal.
Fig. 8 is a graph showing a relationship between temperature and surface tension of the molten pool under atmosphere containing oxygen.
Fig. 9 shows shape of the molten pool and flowage of molten metal under the atmosphere containing oxygen.
Fig. 10 is perspective view showing a nozzle of the second comparative example.
Fig. 11 is a cross-sectional view showing at a Line XI in Fig. 10.
Fig. 12 is a perspective view showing a nozzle of the First Embodiment.
Fig. 13 is a cross-sectional view at a Line XIII in Fig. 12.
Fig. 14 is a perspective view showing a nozzle of the Second Embodiment.
Fig. 15 is a cross-sectional view at a Line XV in Fig. 14.

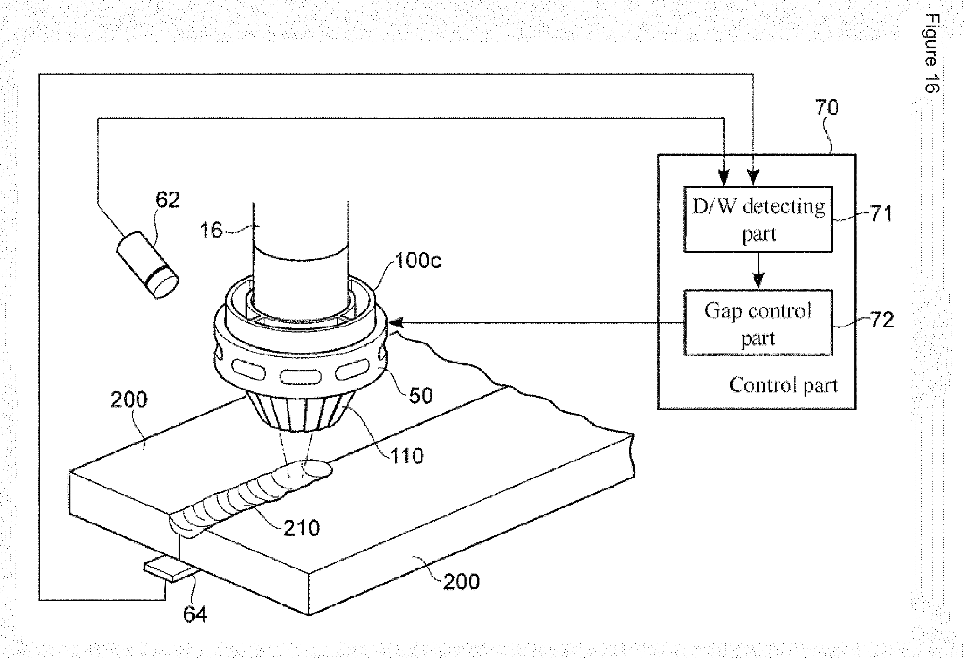

Fig. 16 is a perspective view showing a welding device of Third Embodiment.
Fig. 17 is a graph showing a relationship between gap distance of a nozzle and a flow rate of a nozzle exit in an experimental example.
Fig. 18 is a graph showing a relationship between a gas flow rate and D/W, which is a ratio of depth D of the molten pool to width W of the molten pool in the experimental example.
Fig. 19 is a graph showing the relationship between a gas flow rate and oxygen concentration within a molten pool in the experimental example.
Fig. 20 shows a molten pool when a gas flow rate in the experimental example is 1 LM.
Fig. 21 shows a molten pool when a gas flow rate in the experimental example is 4 LM.
Fig. 22 shows a molten pool when a gas flow rate in the experimental example is 9 LM.
Fig. 23 shows a molten pool when a gas flow rate in the experimental example is 10 LM.
Fig. 24 shows a molten pool when a gas flow rate in the experimental example is 20 LM.
Fig. 25 is a table showing strength of a welding part in the experimental example.

### Mode for Carrying Out the Invention

Hereafter, the welding method, the welding nozzle and the welding device relating to embodiments of the present invention will be explained in detail.

First, a first comparative example is explained. In the present comparative example, a welding nozzle relating to the present comparative example is mounted to a torch that is used for common TIG welding. Consequently, depth of penetration of a molten pool is increased by introducing oxygen, which is a surface-active element, into the molten pool. As the surface-active element, other than oxygen, sulfur, selenium and tellurium are exemplified. As a metallic material where the depth of penetration of the molten pool is increased by introducing the surface-active element into the molten pool, a metallic material containing any of, for example, Fe, Ni, an alloy of Fe and Ni and stainless steel is exemplified.

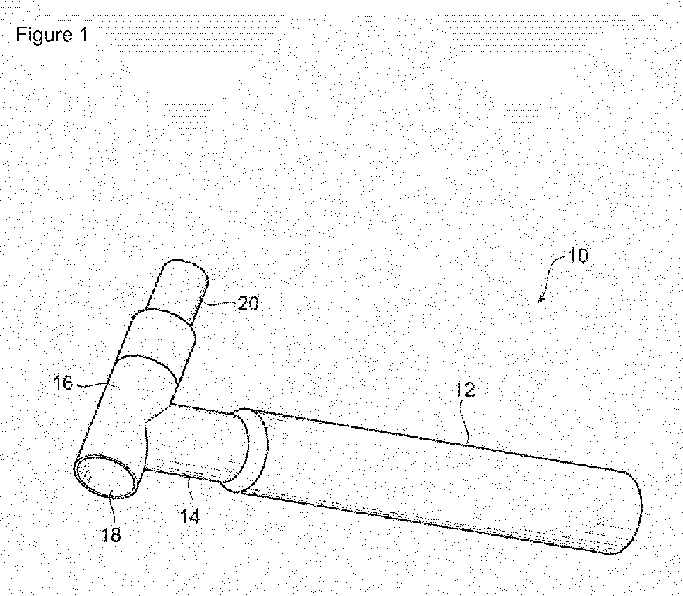

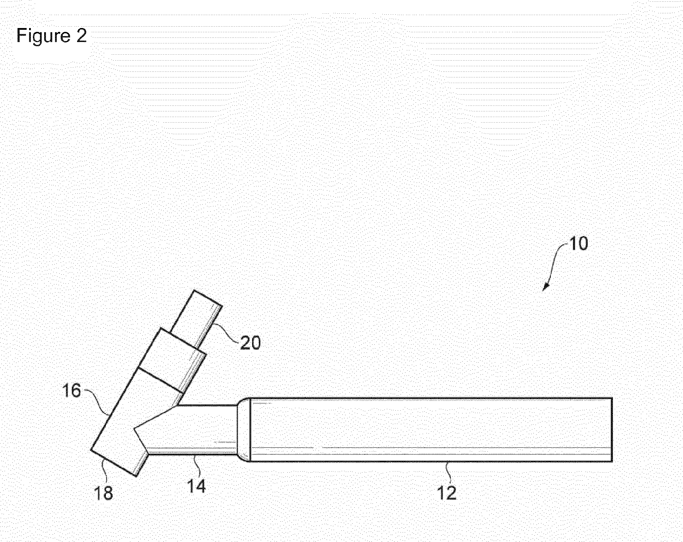

First, the torch for TIG welding is briefly explained. As shown in Fig. 1 and Fig. 2, a torch 10 used in the present comparative example is equipped with a handle 12, a connection 14 a torch body 16, a gas feed port part 18 and a sleeve 20. The torch 10 used in the present comparative example has a structure similar to that used for common TIG welding. The handle 12 has circular cylindrical shape that is easily gripped by an operator. Power for generating arc is externally supplied to the handle 12. A tungsten electrode within the sleeve 20 and an external power source are electrically connected via a power line within the handle 12. The torch body 16 having cylindrical shape is linked with the handle 12 via the connection 14 by forming an angle, for example at 60 °. One end of the torch body 16 is equipped with a gas feed port part 18 where inert gas, such as Ar or He, is introduced. Furthermore, as the inert gas to be used, it does not have to be 100 % Ar gas or 100 % He gas, but it may contain a quantity of other element gas, such as H₂. The other end of the torch body 16 is equipped with the sleeve 20 that surrounds a rod-state tungsten electrode, and where a welding nozzle to be described later is mounted.

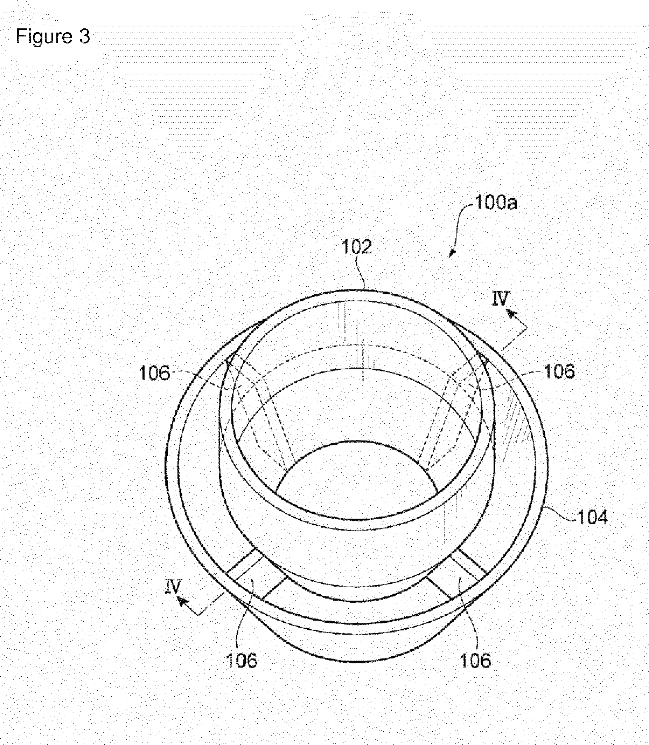

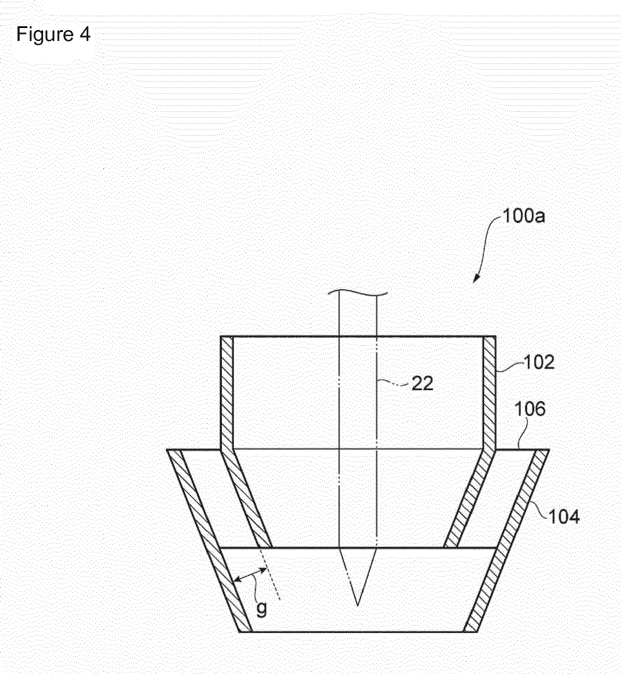

Hereafter, the welding nozzle of the present comparative example is explained. As shown in Fig. 3 and Fig. 4, a welding nozzle 100a of the present comparative example is equipped with a nozzle inner cylinder 102, a nozzle outer cylinder 104 and connecting wings 106. The nozzle inner cylinder 102 distributes inert gas inside while surrounding a side surface of the tungsten electrode 22 with its inner wall surface. The nozzle outer cylinder 104 distributes the atmosphere that has been suctioned due to a reduction of pressure generated in association with a flow of the inert gas that is distributed in the nozzle inner cylinder 102 in the gap with the nozzle inner cylinder 102 while surrounding a side surface of the nozzle inner cylinder 102. The connecting wings 106 connect the nozzle inner cylinder 102 and the nozzle outer cylinder 104 at predetermined intervals g, respectively.

Herein, the interval g between the nozzle inner cylinder 102 and the nozzle outer cylinder 104 can be set to, for example, 1 mm to 5 mm, i.e., 3 mm, when a flow rate of the inert gas is 4 LM to 9 LM and arc length, which is the length of an arc formed between the tungsten electrode 22 and a metallic material to be welded, is 3 mm. If the arc length becomes longer, an effect to shield a molten pool 210 of the inert gas is decreased, and an amount of oxygen to be introduced to the molten pool 210 is increased. Consequently, the optimum interval g fluctuates based upon the flow rate of the inert gas and the arc length. Further, a positional relationship of a tip of the nozzle outer cylinder 104 to that of the tungsten electrode 22 is a positional relationship where the tip of the nozzle outer cylinder 104 protrudes more than the tip of the tungsten electrode 22 toward a direction of the metallic material to be welded and the entire tungsten electrode 22 is surrounded by the nozzle outer cylinder 104. However, the tip of the nozzle outer cylinder 104 can be arranged at a position recessed from the metallic material from the tip of the nozzle cylinder 102. Even in such positional relationship, an effect for suction in the atmosphere is demonstrated. Further, the tungsten electrode 22 can be arranged at a position recessed inside the welding nozzle 100a from the metallic material to be welded, and the upper limit should be a position recessed to the inside by the arc length compared to one at the side of the metallic material to be welded by the tip of either the nozzle inner cylinder 102 or the nozzle outer cylinder 104. Although it is desirable that the tip of the tungsten electrode 22 can be visually confirmed from a viewpoint of welding work, if the tungsten electrode 22 is recessed to the inside than the tip of the nozzle 100a within the range of the arc length, these are joinable.

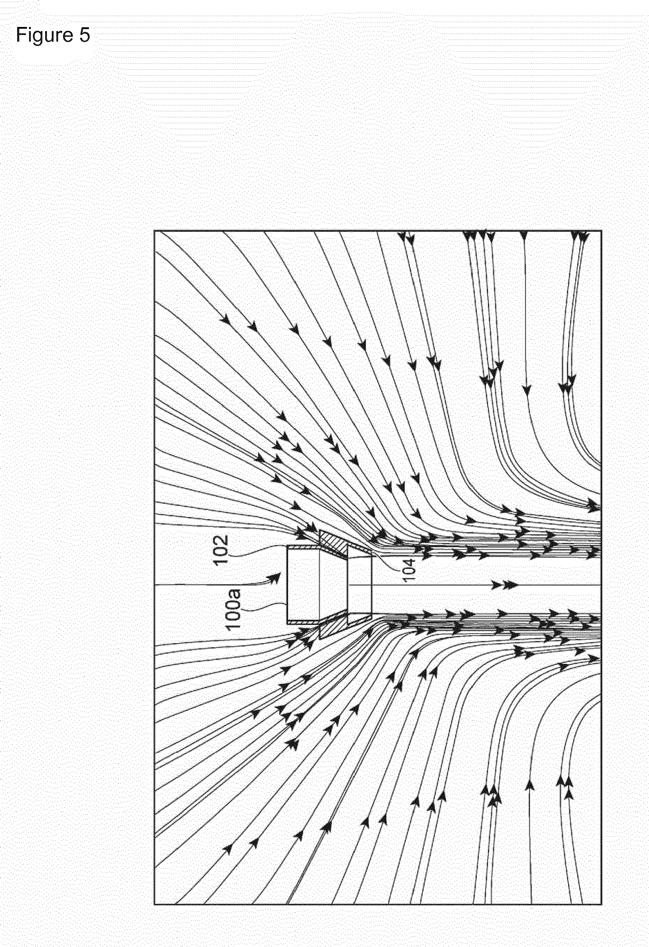

Hereafter, action and effects of the welding nozzle 100a of the present comparative example are explained. Upon arc welding, inert gas is distributed within the nozzle inner cylinder 102, and the inert gas is supplied to a surface of a metallic material to be welded and the tungsten electrode 22 is shielded. Further, voltage is applied between the tungsten electrode 22 and the metallic material, and an arc is generated. The surface of the metallic material is heated by the arc, and a molten pool is formed. In this case, as it is known as Bernoulli's theorem, pressure is reduced in association with distribution of inert gas within the nozzle inner cylinder 102. In association with reduction of the pressure within the nozzle inner cylinder 102, as indicated with arrows in Fig. 5, the suctioned atmosphere is distributed in the gap between the nozzle inner cylinder 102 and the nozzle outer cylinder 104. Oxygen in the suctioned atmosphere is introduced into the molten pool. Furthermore, it is believed that the atmosphere would be introduced into the molten pool via the gap between the nozzle inner cylinder 102 and the nozzle outer cylinder 104 even due to a reduction of pressure by a plasma air current generated between the tungsten electrode 22 and the molten pool, other than the inert gas that is distributed within the nozzle inner cylinder 102.

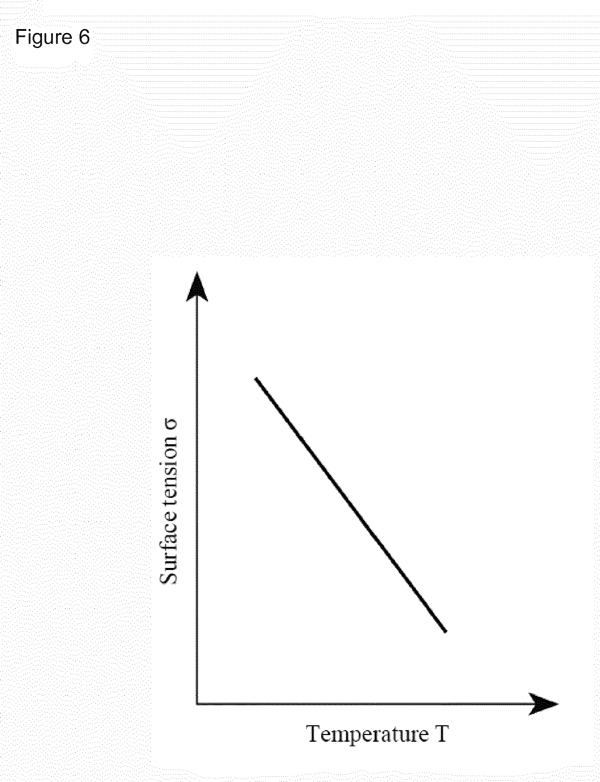

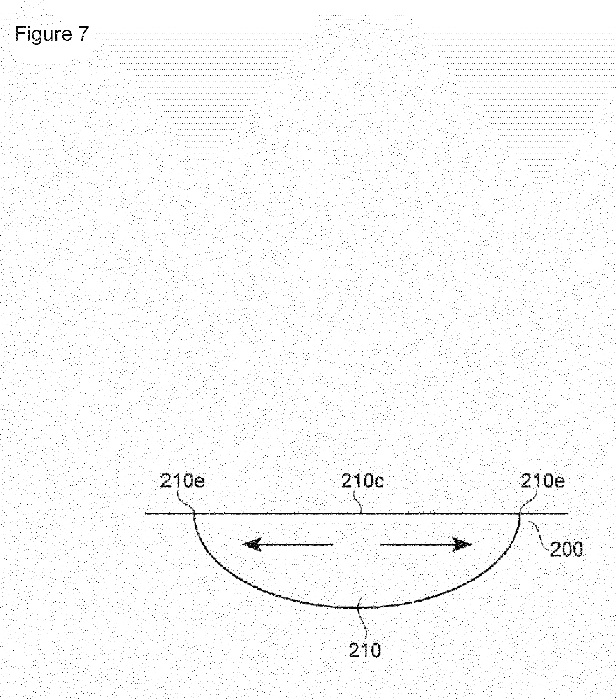

As shown in Fig. 6, with iron group metal, surface tension σ is reduced in association with an increase of temperature T. Therefore, as shown in Fig. 7, in the molten pool 210 of an iron material 200, the surface tension becomes greater in a molten pool end portion 210e at lower temperature than a molten pool center portion 210c at higher temperature. Consequently, as shown in Fig. 7, on the surface of the molten pool 210, flowage from the molten pool center portion 210c to the molten pool end portion 210e occurs. Consequently, in general, depth of penetration of the molten pool 210 becomes shallower with TIG welding.

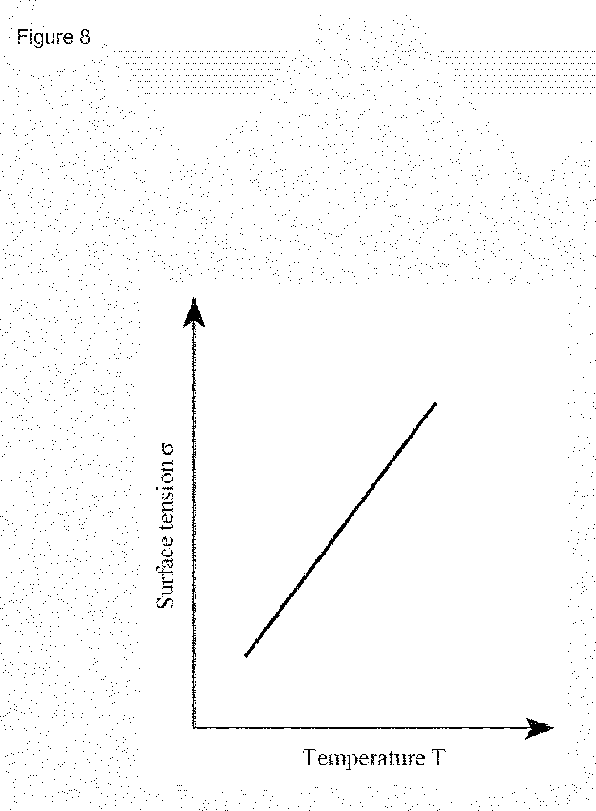

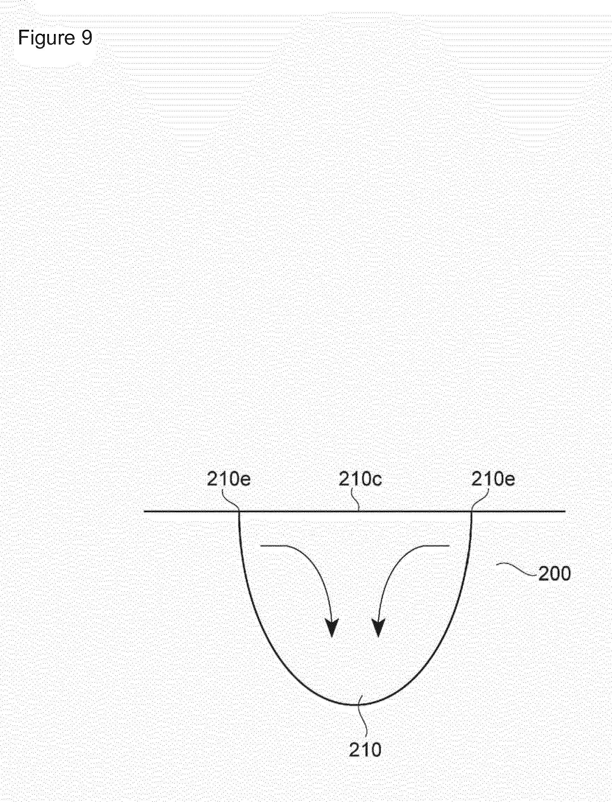

In the meantime, when oxygen, which is surface-active element, is introduced into the molten pool 210, as shown in Fig. 8, the surface tension σ is increased in association with the increase in the temperature T. Therefore, as shown in Fig. 9, in the molten pool 210 of the iron material 200, the surface tension becomes greater in the molten pool center portion 210c at higher temperature than the molten pool end portion 210e at lower temperature. Consequently, as shown in Fig. 9, flowage from the molten pool end portion 210e to the molten pool center potion 210c occurs on the surface of the molten pool 210. Therefore, it becomes possible to deepen the depth of penetration of the molten pool 210 with TIG welding using the welding nozzle 100a of the present comparative example. Furthermore, in Fe or an alloy, such as stainless steel containing Fe as a principal element, the amount of oxygen to cause the depth of penetration of the molten pool 210 to be deeper is in a case when the amount of oxygen in the molten pool 210 is 70 ppm to 300 ppm, and is in a case when the amount of oxygen in the molten pool 210 is 70 ppm to 160 ppm. Furthermore, on the occasion of introducing oxygen in the atmosphere into the molten pool 210, nitrogen in the atmosphere is also introduced at the same time. When it is desired to suppress the introduction of nitrogen in the atmosphere, implementation of the welding method of the present comparative example in the atmosphere where a ratio of oxygen is increased and a ratio of nitrogen is decreased compared to the normal atmosphere can be considered. Thus, in the present comparative example, it is possible to control the amount of oxygen to be introduced into the molten pool 210 by adjusting a composition of the atmosphere itself, as well.

In the present comparative example, in the welding method where inert gas is supplied onto a surface of the iron material 200 from the inside of the cylindrical welding nozzle 100a and the surface of the iron material 200 where inert gas has been supplied by the welding nozzle 100a is heated, oxygen in the atmosphere that has been suctioned due to a reduction of pressure generated in association with a flow of the inert gas is introduced into the molten pool 210 generated on the surface of the iron material 200. Consequently, even though another supply source of oxygen is not prepared as with double-shielded TIG welding, oxygen is introduced into the molten pool 210 and the depth of penetration of the molten pool 210 is further deepened and a weld efficiency can be enhanced.

In the present comparative example, the welding nozzle 100a has the nozzle inner cylinder 102 where inert gas is distributed inside, and the nozzle outer cylinder 104 where the atmosphere that has been suctioned due to a reduction of pressure in association with a flow of the inert gas that is distributed in the nozzle inner cylinder 102 is distributed in the gap with the nozzle inner cylinder 102 while surrounding the side surface of the nozzle inner cylinder 102. Further, while inert gas is supplied to the iron material 200 from the inside of the nozzle inner cylinder 102 and the atmosphere that has been suctioned due to a reduction of pressure generated in association with a flow of inert gas that is distributed in the nozzle inner cylinder 102 is distributed in the gap between the nozzle inner cylinder 102 and the nozzle outer cylinder 104, oxygen in the atmosphere is introduced into the molten pool 210. Consequently, oxygen can be introduced into the molten pool 210 only with the welding nozzle 100a with this simple structure having the nozzle inner cylinder 102 and the nozzle outer cylinder 104.

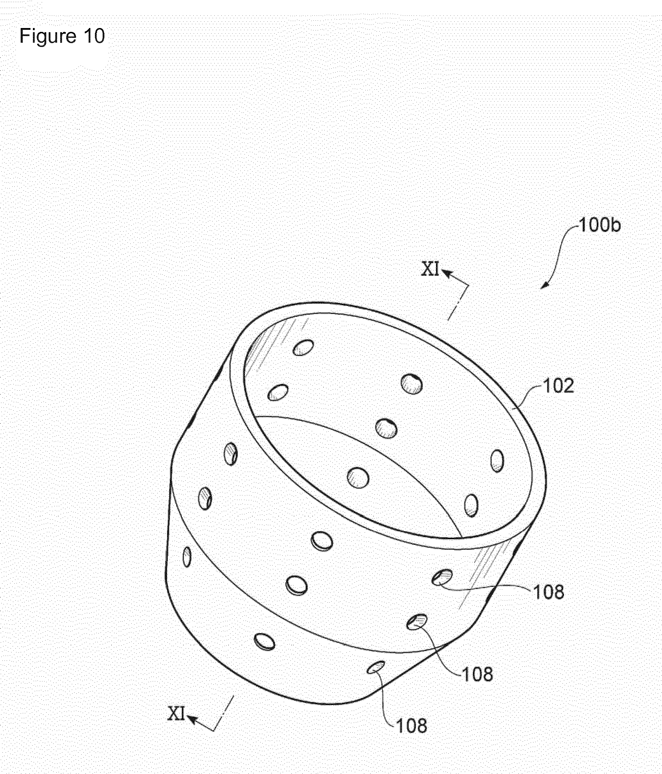

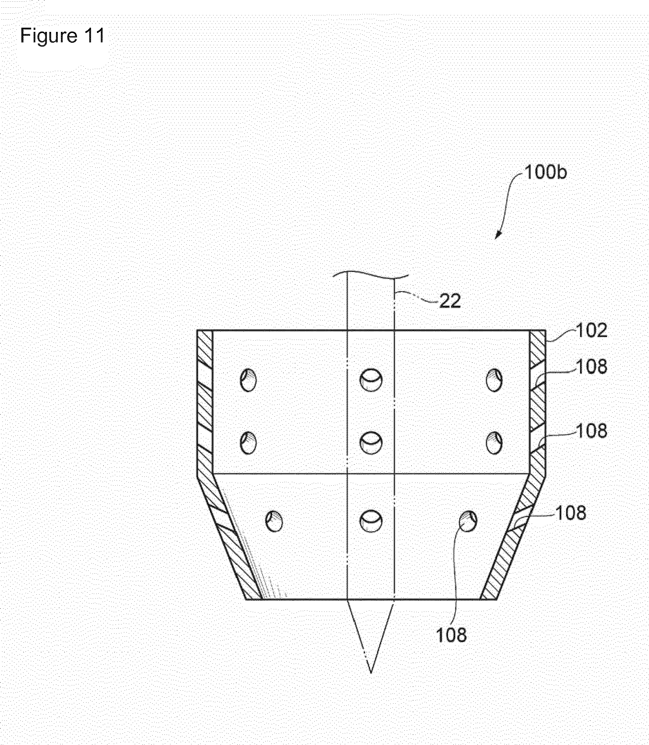

Hereafter, a second comparative example is explained. In the present comparative example, oxygen in the atmosphere is introduced into the molten pool 210 using a welding nozzle with different shape from that in the first comparative example. As shown in Fig. 10 and Fig. 11, a welding nozzle 100b of the present comparative example is equipped with a plurality of atmosphere introduction hole parts 108 that lead to the inside of the nozzle inner cylinder 102 from the outside of the nozzle inner cylinder 102 on the side surface of the nozzle inner cylinder 102. As shown in Fig. 11, orientation of each hole of the atmosphere introduction hole parts 108 can be orientation to lead to the inside of the nozzle inner cylinder 102 while being orientated toward the metallic material to be welded from the outside of the nozzle inner cylinder 102.

When inert gas is distributed within the nozzle inner cylinder 102, as similar to the first comparative example, the atmosphere that has been suctioned from the outside of the nozzle inner cylinder 102 is distributed to the atmosphere introduction hole parts 108 due to a reduction of pressure generated in association with a flow of the inert gas. Oxygen contained in the atmosphere introduced from the atmosphere introduction hole parts 108 is then introduced into the molten pool 210.

In the present comparative example, the welding nozzle 100b has the atmosphere introduction hole parts 108 that lead to the inside of the welding nozzle 100b from the outside of the welding nozzle 100b, and where the atmosphere that has been suctioned due to a reduction of pressure generated in association with a flow of the inert gas that is distributed within the welding nozzle 100b is distributed, and while the atmosphere that has been suctioned due to a reduction of pressure generated in association with a flow of the inert gas that is distributed within the welding nozzle 100b is distributed in the atmosphere introduction hole parts 108, oxygen in the atmosphere is introduced into the molten pool 210. Consequently, oxygen can be introduced into the molten pool 210 only with the welding nozzle 100b with the simple structure having the atmosphere introduction hole parts 108.

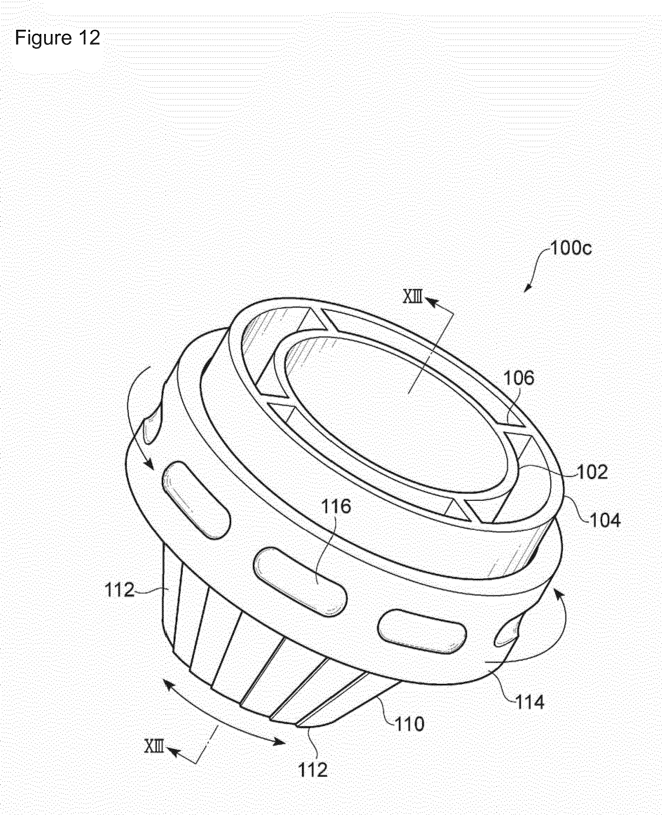

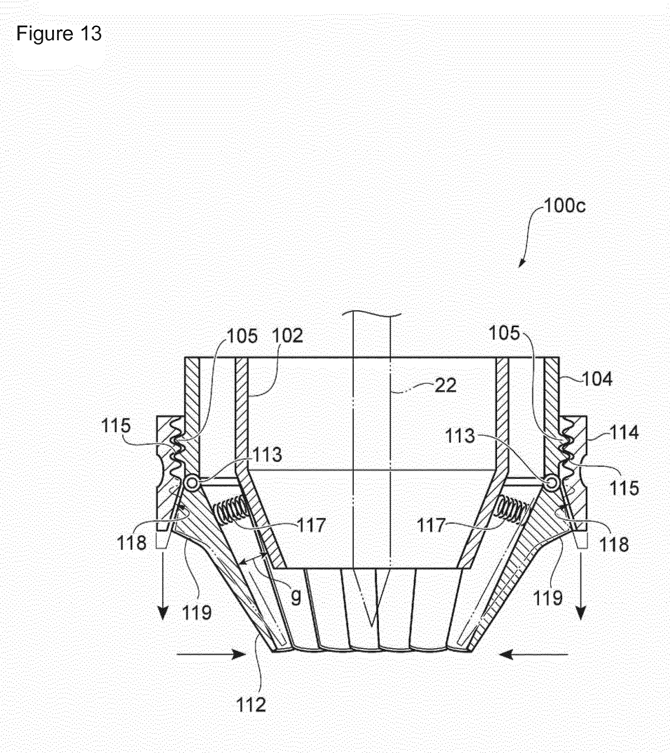

Hereafter, a First Embodiment of the present invention is explained. In the present embodiment, an amount of oxygen to be introduced into the molten pool 210 is controlled by controlling the gap between the nozzle inner cylinder 102 and the nozzle outer cylinder 104 in the first comparative example. As shown in Fig. 12 and Fig. 13, the welding nozzle 100c of the present embodiment is equipped with a variable nozzle 110 and a nut 114 in addition to the nozzle inner cylinder 102, the nozzle outer cylinder 104 and the connecting wing 106 as similar to the first comparative example above.

The variable nozzle 110 is configured such that ends of a plurality of long thin nozzle pieces 112 are overlapped with each other. Ends of the nozzle pieces 112 are connected to an end of the nozzle outer cylinder 104 with hinges 113 to be flexible, respectively. Coil springs 117 are inserted between a surface of the nozzle pieces 112 and an outer surface of the nozzle inner cylinder [102], respectively. The coil spring 117 provides the force to open toward the outside of the welding nozzle 100c to the nozzle pieces 112 connected to the nozzle outer cylinder 104 with the hinges 113, respectively. Furthermore, the coil spring 117 may be an axle spring that provides force to open itself toward the outside of the welding nozzle 100c relative to the nozzle piece 112 in the hinges 113, respectively. Nozzle piece convex parts 119 that protrude toward the outside of the welding nozzle 100c are established on the outer surfaces in the vicinity of the hinges 113 of the nozzle pieces 112, respectively.

A plurality of nut concave parts 116 are established around the outer periphery of the nut 114 so as to allow an operator to easily grip them. Screw threads 115 that will be engaged with screw threads 105 are established on the outer periphery of the nozzle outer cylinder 104 on the inner periphery of the nut 114, respectively. When the nut 114 is rotated in the circumferential direction of the welding nozzle 100c due to the screw threads 105 and 115, the nut 114 slides in a direction approaching to or receding from a metallic material to be welded on the nozzle outer cylinder 104. Slopes 118 inclining toward the outside of the welding nozzle 100c are established at the end portion at the metallic material side to be welded on the inner periphery of the nut 114.

When the nut 114 is rotated in the circumferential direction of the welding nozzle 100c and the nut 114 is allowed to slide in the direction approaching to a metallic material to be welded on the nozzle outer cylinder 104, the slopes 118 slides on the nozzle piece convex parts 119 of the nozzle pieces 112 while tucking a nozzle piece convex parts 119 inward, respectively. Consequently, the variable nozzle 110 made from the nozzle pieces 112 where their end portions are overlapped with each other is pursed, and the gap g is reduced. In the meantime, the nut 114 is rotated in the reverse direction and the nut 114 is allowed to slide on the nozzle outer cylinder 104 in the direction receding from a metallic material to be welded, the distance where nozzle piece convex part 119 is tucked inward by the slope 118 becomes shorter. Consequently, the variable nozzle 110 is expanded due to spring force of the coil spring 117, and the gap g is increased.

The amount of oxygen to be introduced in order to bring the molten pool 210 to an ideal state varies depending upon the state of welding. However, in the present embodiment, the welding nozzle 100c can adjust the size of the gap g between the nozzle inner cylinder 102 and the nozzle outer cylinder 104, and the amount of atmosphere that is distributed in the gap g between the nozzle inner cylinder 102 and the nozzle outer cylinder 104 is controlled by adjusting the size of the gap g between the nozzle inner cylinder 102 and the nozzle outer cylinder 104, and the amount of oxygen to be introduced into the molten pool 210 is controlled. Consequently, the amount of oxygen to be introduced into the molten pool 210 can be controlled by responding to various statuses of welding.

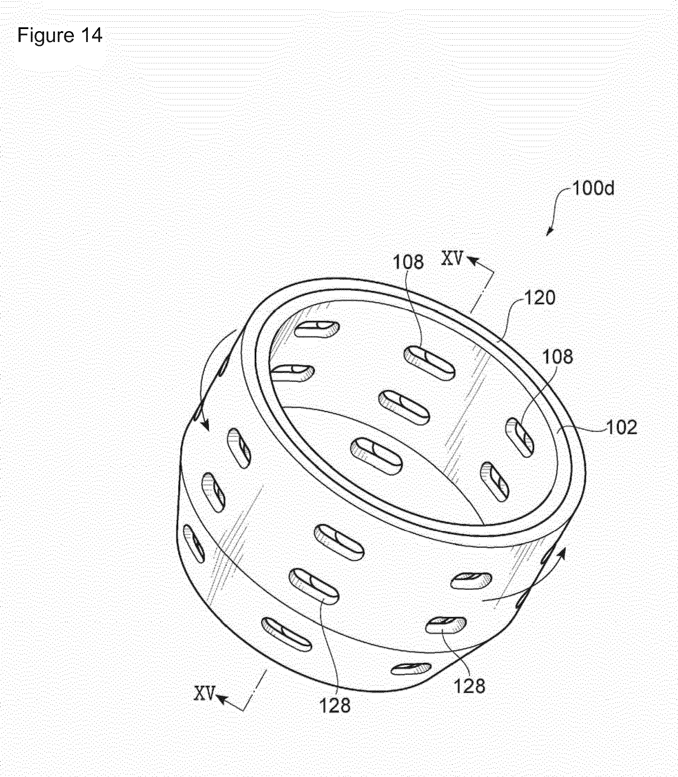

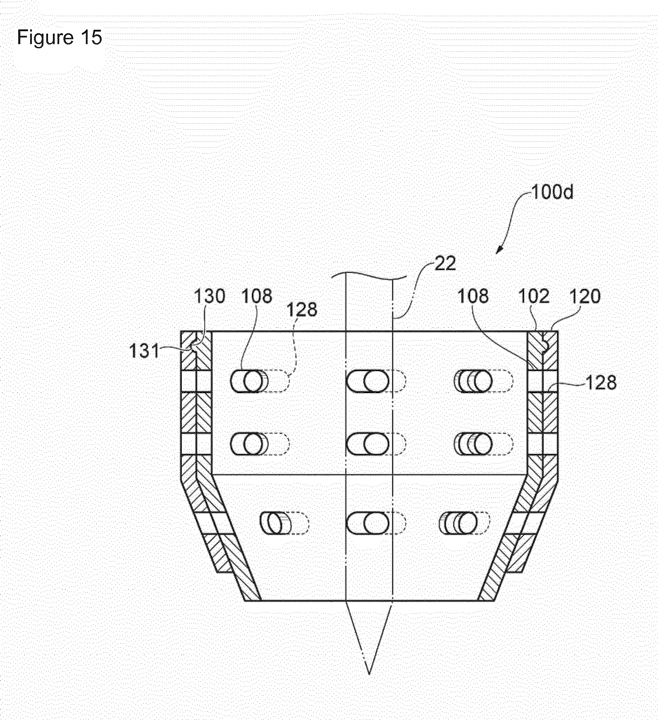

Hereafter, a Second Embodiment of the present invention is explained. In the present embodiment, the amount of oxygen to be introduced into the molten pool 210 is controlled by controlling the size of the atmosphere introduction hole part 108 in the second comparative example. As shown in Fig. 14 and Fig. 15, a welding nozzle 100d of the present embodiment is equipped with a nozzle outer cylinder 120 where its inner periphery is closely located on the outer periphery of the nozzle inner cylinder 102 in addition to the nozzle inner cylinder 102 of the second comparative example. The nozzle outer cylinder 120 is equipped with a plurality of atmosphere introduction hole parts 128 that are long in a circumferential direction of the welding nozzle 100d on its side surface. Further, a plurality of atmosphere introduction hole parts 108 that are long in the circumferential direction of the welding nozzle 100d corresponding to the shape of the atmosphere introduction hole parts 128 are established at sites corresponding to the atmosphere introduction hole parts 128 of the nozzle outer cylinder 120 on the side of the nozzle inner cylinder 102, respectively.

A nozzle inner cylinder convex part 130 is established on the outer periphery of the nozzle inner cylinder 102. A nozzle outer cylinder concave part 131 is established on the inner periphery of the nozzle outer cylinder 120. Fitting of the nozzle inner cylinder convex part 130 into the nozzle outer cylinder concave part 131 with each other enables the nozzle inner cylinder 102 and the nozzle outer cylinder 120 to rotate in the circumferential direction of the welding nozzle 100d relative to each other while they are closely attached. An area at a site where the atmosphere introduction hole part 108 of the nozzle inner cylinder 102 is matched with the atmosphere introduction hole part 128 of the nozzle outer cylinder 120 is changed by rotating the nozzle inner cylinder 102 and the nozzle outer cylinder 120 relative to each other. Consequently, the substantial size of the atmosphere introduction hole parts 108 is adjustable, and the amount of atmosphere that is distributed in the atmosphere introduction hole part 108 by adjusting the size of the atmosphere introduction hole part 108, and the amount of oxygen to be introduced into the molten pool 210 is controlled. Consequently, the amount of oxygen to be introduced into the molten pool 210 can be controlled in response to various statuses of welding.

Hereafter, a Third Embodiment of the present invention is explained. In the present embodiment, a state of the molten pool 210 is monitored, and the amount of oxygen to be introduced into the molten pool [210] is controlled according to the state of the monitored molten pool 210. As shown in Fig_{.} 16, a welding device of the present embodiment is equipped with the welding nozzle 100c of the First Embodiment mounted on the torch body 16, a servo mechanism 50, a photoelectric sensor 62, a temperature sensor 64, a control part 70 and a not-shown gas supply source that supplies inert gas to the weldiing nozzle 100c. Furthermore, in the present embodiment, the welding nozzle 100d of the Second Embodiment is also applicable. The servo mechanism 50 drives the nut 114 of the welding nozzle 100c, and controls the gap g between the nozzle inner cylinder 102 and the nozzle outer cylinder 104 of the welding nozzle 100c. The photoelectric sensor 62 monitors width of the molten pool 210 and a direction of fluidity of the molten pool 210 using a semiconductor laser and a xenon lamp. The temperature sensor 64 measures temperature on the rear surface of the molten pool 210.

The control part 70 has a D/W detecting part 71 and a gap control part 72. The D/W detecting part 71 detects D/W, which is a ratio of the depth of penetration D to the width W of the molten pool 210, based upon a detection result(s) of the photoelectric sensor 62 and the temperature sensor 64. The D/W detecting part 71 can assume, for example, the depth of penetration D to be maximal when the width D of the molten pool 210 detected by the photoelectric sensor 62 becomes minimal. Alternatively, for example, the fluidity of the molten pool 210 detected by the photoelectric sensor 62 is as shown in Fig. 9, and the D/W detecting part 71 can assume the depth of penetration D as maximal when the fluidity is maximal. Alternatively, for example, when the temperature of the rear surface of the molten pool 210 detected by the temperature sensor 64 becomes maximal, the D/W detecting part 71 can assume the depth of penetration D as maximal. The gap control part 72 drives the servo mechanism 50 based upon D/W detected by the D/W detecting part 71, and feedback-controls the gap g of the welding nozzle 100c. The gap control part 72 controls the gap *g* of the welding nozzle 100c so as to maintain D/W at maximal due to the feedback control.

According to the present embodiment, the gap control part 72 of the control part 70 controls the amount of oxygen to be introduced into the molten pool 210 based upon the status of the molten pool 210 monitored by the photoelectric sensor 62 and the temperature sensor 64. Consequently, more excellent molten pool 210 can be obtained by controlling the amount of oxygen to be introduced into the molten pool 210 based upon the status of the molten pool 210.

Furthermore, the present invention is not limited to the embodiments above, but various modified forms are applicable. For example, in the embodiments above, the modes where the welding method, the welding nozzle and the welding equipment were applied to TIG welding were mainly explained, but the present invention shall not be limited to these, but is applicable to metal inert gas (MIG) welding, laser welding and plasma welding, as well.

### (Experimental Example 1)

Hereafter, experimental examples of the present invention are explained. The welding nozzle 100a shown in Fig. 3 and Fig. 4 was mounted to the sleeve 20 of the torch 10 shown in Fig. 1 and Fig. 2, and the iron material 200 was welded. A flow rate was changed within the range of 1 LM to 20 LM using Ar gas as inert gas. A welding current to be applied to the tungsten electrode 22 and the iron material 200 was set at 180 A, a welding rate was set at 2 mm/s and the arc length, which is the distance between the tip of the tungsten electrode 22 and the iron material 200, was set at 3 mm. An amount of oxygen in a molten pool was measured with a non-dispersive infrared absorption method using an oxygen-nitrogen analyzer (manufactured by HORIBA, Ltd., product name: EMGA-520). For samples for measurement of the amount of oxygen, a block with approximately 1 mm × 1 mm × 3 mm [of dimensions] was clipped from the molten pool, and after an oxidized film on the surface was polished and removed, they were ultrasonic-cleaned with acetone for 10 minutes, and in order to prevent oxidation of the surface, they were stored in acetone immediately before placing to a device.

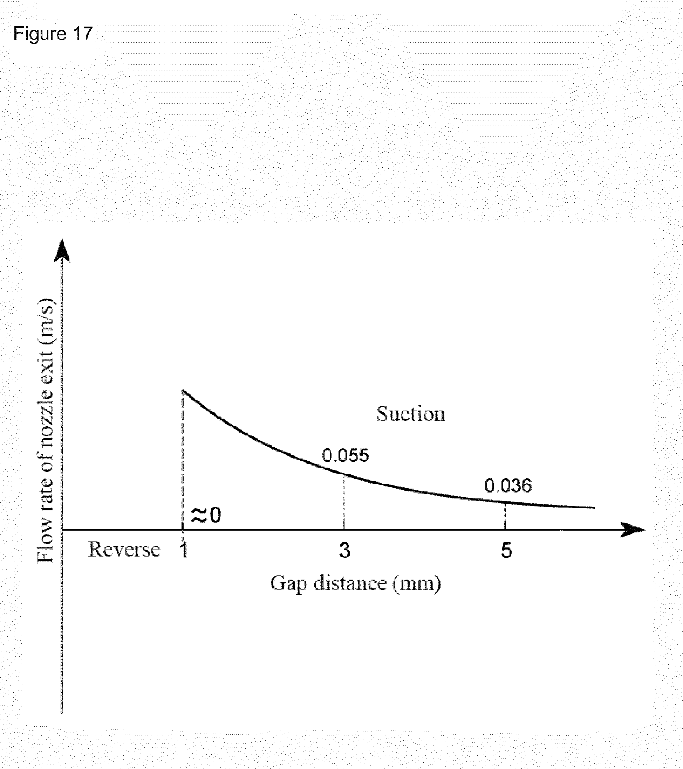

First, a flow rate at the exit of the nozzle outer cylinder 104 of the welding nozzle 100a at the time of changing the gap *g* (gap distance) between the nozzle inner cylinder 102 and the nozzle outer cylinder 104 of the welding nozzle 100a to 1 mm, 3 mm and 5 mm is shown in Fig. 17. As shown in Fig. 17, the shorter the gap distance becomes, the stronger the capacity to suction the atmosphere becomes, but if the gap distance becomes 1 mm or less, the direction of the air current is reversed. In experiments hereafter, the gap distance was set at 3 mm.

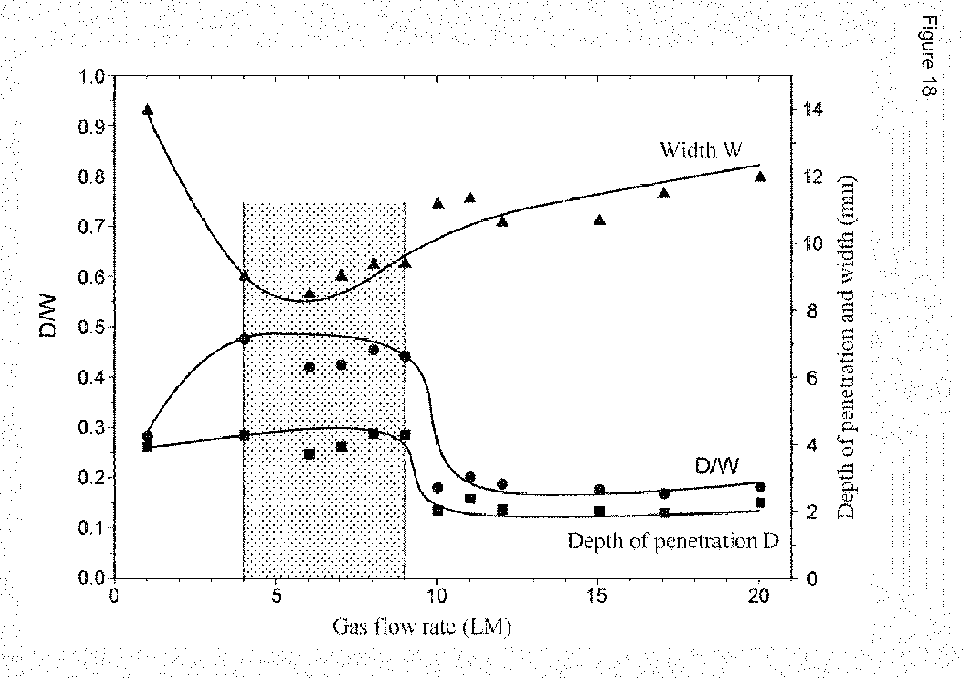

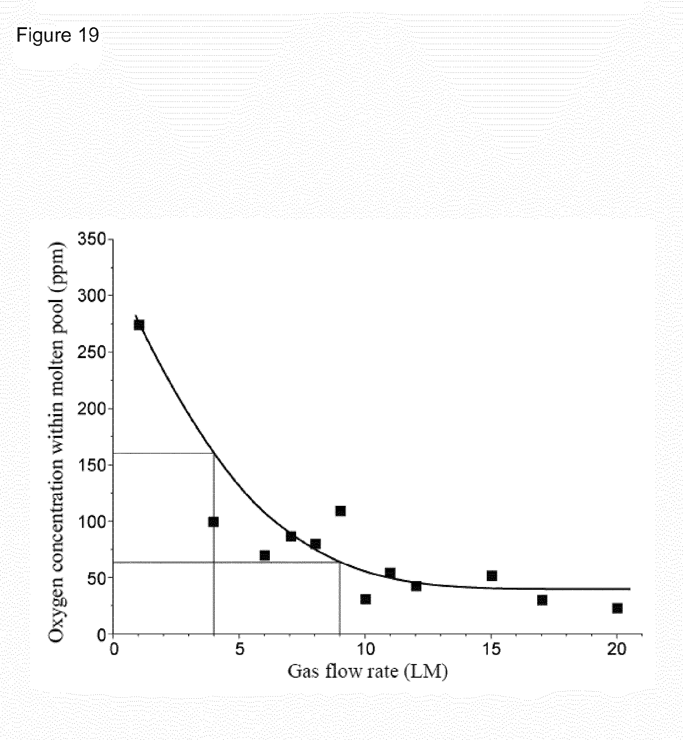

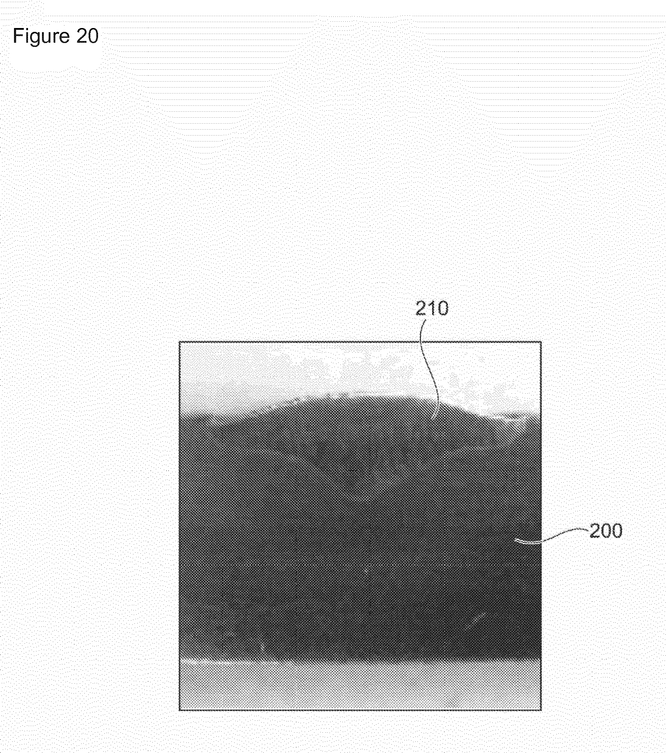

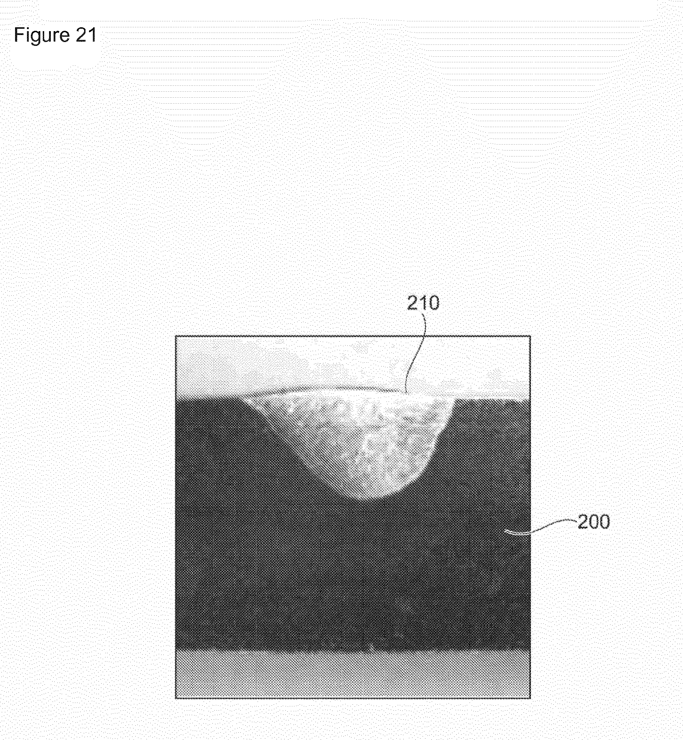

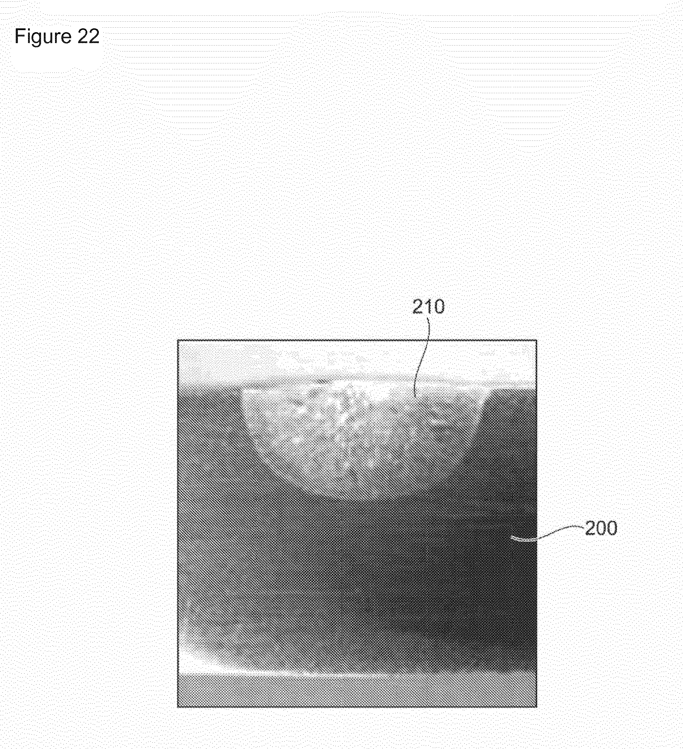

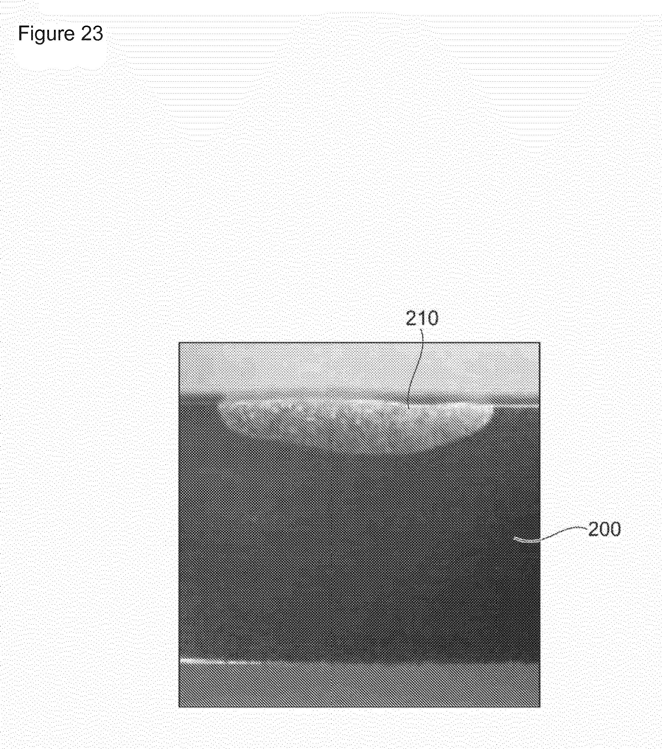

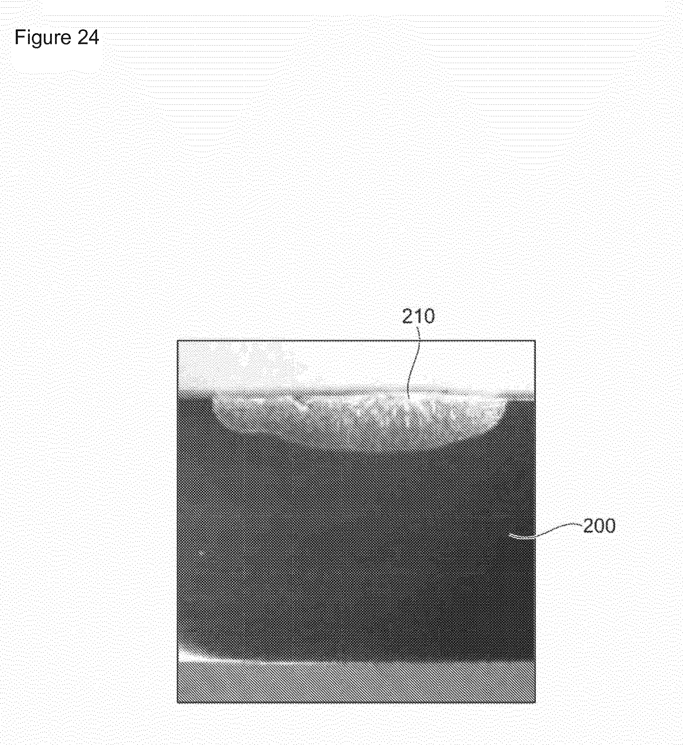

Fig. 18 shows the width W, the depth of penetration D and D/W of the molten pool 21 0 at each gas flow rate; Fig. 19 shows oxygen concentration within the molten pool 210 at each gas flow rate; and Figs. 20 to 24 show the molten pool 210 at 1 LM, 4 LM, 9 LM, 10 LM and 20 LM of the gas flow rate, respectively. As shown in Fig. 18 and Figs. 20 to 24, the flow rate of Ar gas is at 1 LM to 9 LM, and it becomes ascertained that it is possible to deepen the depth of penetration D of the molten pool 210 within the range of 4 LM to 9 LM. According to Fig. 19, it becomes ascertained that the oxygen concentration in the molten pool 210 is decreased as the gas flow rate is increased. It [also] becomes ascertained that the oxygen concentration of the molten pool 210 enabling to deepen the depth of penetration D of the molten pool 210 is 70 ppm to 300 ppm, and 70 ppm to 160 ppm. Further, in the tungsten electrode 22 after welding with 80 mm of bead length, obvious wear was not confirmed before and after welding.

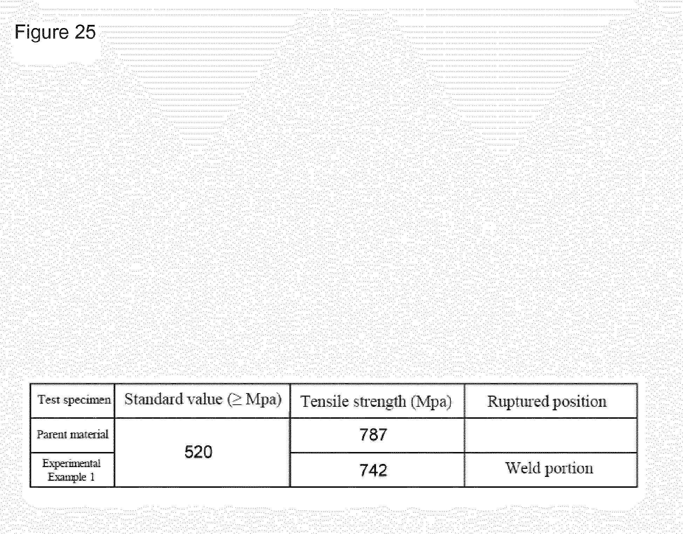

The welding nozzle 100a shown in Fig. 3 and Fig. 4 was mounted to the sleeve 20 of the torch 10 shown in Fig. 1 and Fig. 2, and the iron material 200 was welded. TIG welding was conducted in two layers of single pass welding from both sides under conditions of 180 A of a welding current, 3 mm of arc length, 8 LM of a flow rate of Ar gas, 1 mm/s of a welding rate and 3 mm of gap distance, and welded parts were cut to tension test specimens and a tension test was conducted. As shown in Fig. 25, the tensile strength of the welded part was 742 MPa while the tensile strength of a parent material is 787 Mpa, and it becomes ascertained that excellent tensile strength exceeding 520 MPa, which is a standard value, is obtained.

According to the arc welding method, the nozzle for arc welding and the arc welding device of one embodiment of the present invention, it becomes possible to introduce oxygen into a molten pool with a simpler technique, to further deepen the depth of penetration of the molten pool, and to enhance a weld efficiency.

- 10: torch
- 12: handle
- 14: connection
- 16: torch body
- 18: gas inlet part
- 20: sleeve
- 22: tungsten electrode
- 50: servo mechanism
- 62: photoelectric sensor
- 64: temperature sensor
- 70: control part
- 71: D/W detecting part
- 72: gap control part
- 100a to 100d: welding nozzle
- 102: nozzle inner cylinder
- 104: nozzle outer cylinder
- 105: screw thread
- 106: connecting wing
- 108: atmosphere introduction hole part
- 110: variable nozzle
- 112: nozzle piece
- 113: hinge
- 114: nut
- 115: screw thread
- 116: nut concave part
- 117: coil spring
- 118: slope
- 119: nozzle piece convex part
- 120: nozzle outer cylinder
- 128: atmosphere introduction hole part
- 130: nozzle inner cylinder convex part
- 131: nozzle outer cylinder concave part
- 200: iron material
- 210: molten pool
- 210c: molten pool center part
- 210e: molten pool end portion

## Claims

1. A welding method, comprising:
an inert gas supply step to supply inert gas to a surface of a metallic material from the inside of a cylinder welding nozzle (100c);
a heating step to heat the surface of the metallic material where the inert gas has been supplied by the welding nozzle in the inert gas supply step; and
an oxygen introduction step to introduce oxygen in atmosphere that is suctioned due to a reduction of pressure generated in association with a flow of the inert gas in the inert gas supply step to a molten pool generated on the surface of the metallic material in the heating step **characterised in that**:
the welding nozzle comprises:
a nozzle inner cylinder (102) through which the inert gas is distributed, and
a nozzle outer cylinder (104) through which the atmosphere that is suctioned is distributed through a gap (g) with the nozzle inner cylinder while surrounding a side of the nozzle inner cylinder;
in the inert gas supply step, the inert gas is supplied to the metallic material from the inside of the nozzle inner cylinder;
in the oxygen introduction step, while the atmosphere that is suctioned is distributed through the gap between the nozzle inner cylinder and the nozzle outer cylinder, oxygen in the atmosphere is introduced into the molten pool;
the welding nozzle further comprises a gap variable unit that can adjust size of the gap between the nozzle inner cylinder and the nozzle outer cylinder; and
in the oxygen introduction step, an amount of atmosphere that is distributed through the gap between the nozzle inner cylinder and the nozzle outer cylinder is controlled by adjusting the size of the gap between the nozzle inner cylinder and the nozzle outer cylinder with the gap variable unit, and the amount of oxygen introduced into the molten pool is thereby controlled.

2. The welding method according to claim 1, wherein
the size of the gap between the nozzle inner cylinder and the nozzle outer cylinder is greater than 1 mm but 5 mm or less.

3. A welding method, comprising:
an inert gas supply step to supply inert gas to a surface of a metallic material from the inside of a cylinder welding nozzle (100d);
a heating step to heat the surface of the metallic material where the inert gas has been supplied by the welding nozzle in the inert gas supply step; and
an oxygen introduction step to introduce oxygen in atmosphere that is suctioned due to a reduction of pressure generated in association with a flow of the inert gas in the inert gas supply step to a molten pool generated on the surface the metallic material in the heating step, **characterised in that**:
the welding nozzle comprises atmosphere introduction holes (108) that lead to the inside of the welding nozzle from the outside of the welding nozzle, and through which the atmosphere that is suctioned is distributed;
in the oxygen introduction step, while the atmosphere that is suctioned is distributed through the atmosphere introduction holes, oxygen in the atmosphere is introduced into the molten pool;
the welding nozzle further comprises an introduction hole variable unit that can adjust the size of the atmosphere introduction holes, and
in the oxygen introduction step, the amount of the atmosphere that is distributed through the atmosphere introduction holes is controlled by adjusting the size of the atmosphere introduction holes with the introduction hole variable unit, and the amount of oxygen introduced into the molten pool is thereby controlled.

4. The welding method according to any one of claims 1 to 3, wherein
in the oxygen introduction step, oxygen in the atmosphere is introduced into the molten pool so as to allow the amount of oxygen in the molten pool to be 70 ppm to 300 ppm.

5. The welding method according to any one of claims 1 to 4, wherein
in the inert gas supply step, the inert gas is supplied by adjusting a flow rate of the inert gas at 1 LM to 9 LM.

6. A welding nozzle (100c) that supplies inert gas to a surface of a metallic material from an inside of a cylindrical welding nozzle, and that is used for welding that heats the surface of the metallic material where the inert gas has been supplied by the welding nozzle, **characterised in that** the nozzle comprises:
a nozzle inner cylinder (102) through which the inert gas is distributed, and
a nozzle outer cylinder (104) through which atmosphere is suctioned due to a reduction of pressure generated in association with a flow of the inert gas that is distributed through the nozzle inner cylinder, the atmosphere that is suctioned being distributed through a gap with the nozzle inner cylinder while surrounding the side of the nozzle inner cylinder, and
a gap variable unit that can adjust the size of the gap between the nozzle inner cylinder and the nozzle outer cylinder, wherein:
oxygen in the atmosphere is introduced into a molten pool generated on the surface of the metallic material due to heating by the atmosphere that is suctioned and distributed; and
an amount of atmosphere that is distributed through the gap between the nozzle inner cylinder and the nozzle outer cylinder is controlled by adjusting the size of the gap between the nozzle inner cylinder and the nozzle outer cylinder with the gap variable unit, the amount of oxygen introduced into the molten pool being thereby controlled.

7. Welding equipment, comprising:
the welding nozzle according to claim 6,
a heat source that heats the surface of the metallic material where the inert gas has been supplied by the welding nozzle,
the molten pool monitoring unit that monitors the molten pool, and
an oxygen introduction amount control unit that controls an amount of oxygen introduced into the molten pool by the gap variable unit of the welding nozzle, based upon a state of the molten unit monitored by the molten pool monitoring unit.

8. A welding nozzle (100d) that supplies inert gas to a surface of a metallic material from the inside of a cylindrical welding nozzle, and that is used for welding that heats the surface of the metallic material where the inert gas has been supplied by the welding nozzle, **characterised in that** the nozzle comprises:
atmosphere introduction holes (108) that lead to the inside of the welding nozzle from the outside of the welding nozzle, and through which atmosphere that is suctioned due to a reduction of pressure generated in association with a flow of the inert gas that is distributed through the welding nozzle is distributed, and
an introduction hole variable unit that can adjust the size of the atmosphere introduction holes, wherein:
oxygen in the atmosphere is introduced into a molten pool generated on the surface of the metallic material due to the heating by distributing the atmosphere that is suctioned through the atmosphere introduction holes; and
an amount of the atmosphere that is distributed through the atmosphere introduction holes is controlled by adjusting the size of the atmosphere introduction holes by the introduction hole variable unit, the amount of oxygen introduced into the molten pool being thereby controlled.

9. Welding equipment, comprising:
the welding nozzle according to claim 8,
a heat source that heats the surface of the metallic material where the inert gas has been supplied by the welding nozzle,
the molten pool monitoring unit that monitors the molten pool, and
an oxygen introduction amount control unit that controls an amount of oxygen introduced into the molten pool by the introduction hole variable unit of the welding nozzle, based upon a state of the molten unit monitored by the molten pool monitoring unit.

## Patentansprüche

1. Schweißverfahren, das Folgendes umfasst:
einen Inertgaszufuhrschritt, um Inertgas aus dem Inneren einer Zylinderschweißdüse (100c) einer Oberfläche eines metallischen Materials zuzuführen;
einen Erwärmungsschritt, um die Oberfläche des metallischen Materials, der das Inertgas im Inertgaszufuhrschritt aus der Schweißdüse zugeführt wurde, zu erwärmen; und
einen Sauerstoffeinbringschritt, um Sauerstoff in einer Atmosphäre, die aufgrund einer Druckreduktion angesaugt wurde, die in Zusammenhang mit einem Inertgasstrom in dem Inertgaszufuhrschritt erzeugt wurde, in ein Schmelzbad einzubringen, das auf der Oberfläche des metallischen Materials im Wärmeschritt erzeugt wurde, **dadurch gekennzeichnet, dass**
die Schweißdüse Folgendes umfasst:
einen Düseninnenzylinder (102), durch den das Inertgas verteilt wird, und
einen Düsenaußenzylinder (104), durch den die Atmosphäre, die angesaugt wird, durch einen Spalt (g) mit dem Düseninnenzylinder verteilt wird, wobei er eine Seite des Düseninnenzylinders umgibt,
im Inertgaszufuhrschritt das Inertgas aus dem Inneren des Düseninnenzylinders dem metallischen Material zugeführt wird;
im Sauerstoffeinbringschritt, wobei die angesaugte Atmosphäre durch den Spalt zwischen dem Düseninnenzylinder und dem Düsenaußenzylinder verteilt wird, Sauerstoff in der Atmosphäre in das Schmelzbad eingebracht wird;
die Schweißdüse zusätzlich eine Spaltvariationseinheit umfasst, die die Größe des Spaltes zwischen dem Düseninnenzylinder und dem Düsenaußenzylinder einstellen kann;
im Sauerstoffeinbringschritt eine Menge von Atmosphäre, die durch den Spalt zwischen dem Düseninnenzylinder und dem Düsenaußenzylinder verteilt wird, gesteuert wird, indem die Größe des Spaltes zwischen dem Düseninnenzylinder und dem Düsenaußenzylinder mit der Spaltvariationseinheit eingestellt wird, und die Menge an Sauerstoff, die in das Schmelzbad eingebracht wird, dadurch gesteuert wird.

2. Schweißverfahren nach Anspruch 1, wobei die Größe des Spaltes zwischen dem Düseninnenzylinder und dem Düsenaußenzylinder größer als 1 mm aber kleiner oder gleich 5 mm ist.

3. Schweißverfahren, das Folgendes umfasst:
einen Inertgaszufuhrschritt, um Inertgas aus dem Inneren einer Zylinderschweißdüse (100c) einer Oberfläche eines metallischen Materials zuzuführen;
einen Erwärmungsschritt, um die Oberfläche des metallischen Materials, dem das Inertgas im Inertgaszufuhrschritt aus der Schweißdüse zugeführt wurde, zu erwärmen; und
einen Sauerstoffeinbringschritt, um Sauerstoff in einer Atmosphäre, die aufgrund einer Druckreduktion angesaugt wird, die in Zusammenhang mit einem Inertgasstrom in dem Inertgaszufuhrschritt erzeugt wurde, einem Schmelzbad zuzuführen, das auf der Oberfläche des metallischen Materials im Wärmeschritt erzeugt wurde, **dadurch gekennzeichnet, dass**
die Schweißdüse Atmosphäreeinbringlöcher (108) umfasst, die vom Äußeren der Schweißdüse in das Innere der Schweißdüse führen und durch die die angesaugte Atmosphäre verteilt wird,
im Sauerstoffeinbringschritt, wobei die eingesaugte Atmosphäre durch die Atmosphäreeinbringlöcher verteilt wird, Sauerstoff in der Atmosphäre in das Schmelzbad eingebracht wird;
die Schweißdüse zusätzlich eine Einbringlochvariationseinheit umfasst, die die Größe der Atmosphäreeinbringlöcher einstellen kann, und
im Sauerstoffeinbringschritt die Menge an Atmosphäre, die durch die Atmosphäreeinbringlöcher verteilt wird, gesteuert wird, indem die Größe der Atmosphäreeinbringlöcher mit der Einbringlochvariationseinheit angepasst wird, und die Menge an Sauerstoff, die in das Schmelzbad eingebracht wird, dadurch gesteuert wird.

4. Schweißverfahren nach einem der Ansprüche 1 bis 3, wobei
im Sauerstoffeinbringschritt Sauerstoff in der Atmosphäre in das Schmelzbad eingebracht wird, um zu ermöglichen, dass die Menge an Sauerstoff im Schmelzbad 70 ppm bis 300 ppm beträgt.

5. Schweißverfahren nach einem der Ansprüche 1 bis 4, wobei im Inertgaszufuhrschritt das Inertgas durch die Anpassung einer Strömungsrate des Inertgases bei 1 LM bis 9 LM zugeführt wird.

6. Schweißdüse (100c), die Inertgas aus einem Inneren einer zylindrischen Schweißdüse einer Oberfläche eines metallischen Materials zuführt und die zum Schweißen verwendet wird, das die Oberfläche des metallischen Materials, der das Inertgas durch die Schweißdüse zugeführt wurde, erwärmt; **dadurch gekennzeichnet, dass** die Düse Folgendes umfasst:
einen Düseninnenzylinder (102), durch den das Inertgas verteilt wird, und
einen Düsenaußenzylinder (104), durch den Atmosphäre aufgrund einer Druckreduktion angesaugt wird, die in Zusammenhang mit einem Inertgasstrom, der durch den Düseninnenzylinder verteilt wird, erzeugt wurde, wobei die Atmosphäre, die angesaugt wird, durch einen Spalt mit dem Düseninnenzylinder verteilt wird, wobei er die Seite des Düseninnenzylinders umgibt, und
eine Spaltvariationseinheit, die die Größe des Spaltes zwischen dem Düseninnenzylinder und dem Düsenaußenzylinder einstellen kann, wobei:
Sauerstoff in der Atmosphäre in ein Schmelzbad eingebracht wird, das auf der Oberfläche des metallischen Materials erzeugt wird, und zwar aufgrund von Erwärmen durch die Atmosphäre, die angesaugt und verteilt wird; und
eine Menge an Atmosphäre, die durch den Spalt zwischen dem Düseninnenzylinder und dem Düsenaußenzylinder verteilt wird, gesteuert wird, indem die Größe des Spaltes zwischen dem Düseninnenzylinder und dem Düsenaußenzylinder mit der Spaltvariationseinheit eingestellt wird, wodurch die Menge an Sauerstoff, die in das Schmelzbad eingebracht wird, gesteuert wird.

7. Schweißapparatur, die Folgendes umfasst:
eine Schweißdüse nach Anspruch 6,
eine Wärmequelle, die die Oberfläche des metallischen Materials erwärmt, der das Inertgas durch die Schweißdüse zugeführt wurde,
eine Schmelzbadüberwachungseinheit, die das Schmelzbad überwacht, und
eine Sauerstoffeinbringmengensteuerungseinheit, die eine Menge an Sauerstoff steuert, die durch die Spaltvariationseinheit der Schweißdüse in das Schmelzbad eingeführt wird, und zwar auf Basis eines Zustands der Schmelzeinheit, die durch die Schmelzbadüberwachungseinheit überwacht wird.

8. Schweißdüse (100d), die Inertgas aus einem Inneren einer zylindrischen Schweißdüse einer Oberfläche eines metallischen Materials zuführt und die zum Schweißen verwendet wird, das die Oberfläche des metallischen Materials, der das Inertgas durch die Schweißdüse zugeführt wurde, erwärmt; **dadurch gekennzeichnet, dass** die Düse Folgendes umfasst:
Atmosphäreeinbringlöcher (108), die vom Äußeren der Schweißdüse in das Innere der Schweißdüse führen und durch die die angesaugte Atmosphäre aufgrund einer Druckreduktion, die in Zusammenhang mit einem durch die Schweißdüse verteilten Inertgasstrom erzeugt wurde, verteilt wird,
eine Einbringlochvariationseinheit, die die Größe der Atmosphäreeinbringlöcher einstellen kann, wobei:
Sauerstoff in der Atmosphäre in ein Schmelzbad eingebracht wird, das auf der Oberfläche des metallischen Materials erzeugt wird, und zwar aufgrund von Erwärmen durch Verteilen der durch die Atmosphäreeinbringlöcher angesaugten Atmosphäre; und
eine Menge von Atmosphäre, die durch die Atmosphäreeinbringlöcher verteilt wird, gesteuert wird, indem die Größe der Atmosphäreeinbringlöcher durch die Einbringlochvariationseinheit gesteuert wird, wodurch die Menge an Sauerstoff, die in das Schmelzbad eingebracht wird, gesteuert wird.

9. Schweißapparatur, die Folgendes umfasst:
eine Schweißdüse nach Anspruch 8,
eine Wärmequelle, die die Oberfläche des metallischen Materials erwärmt, der das Inertgas durch die Schweißdüse zugeführt wurde,
eine Schmelzbadüberwachungseinheit, die das Schmelzbad überwacht, und
eine Sauerstoffeinbringmengensteuerungseinheit, die eine Menge an Sauerstoff steuert, die durch die Einbringlochvariationseinheit der Schweißdüse in das Schmelzbad eingebracht wird, und zwar auf Basis eines Zustands des Schmelzbades, das durch die Schmelzbadüberwachungseinheit überwacht wird.

## Revendications

1. Procédé de soudage, comprenant :
une étape de fourniture de gaz inerte consistant à fournir du gaz inerte à une surface d'un matériau métallique depuis l'intérieur d'une buse de soudage cylindrique (100c) ;
une étape de chauffage consistant à chauffer la surface du matériau métallique où le gaz inerte a été fourni par la buse de soudage dans l'étape de fourniture de gaz inerte ; et
une étape d'introduction d'oxygène consistant à introduire de l'oxygène dans l'atmosphère qui est aspiré du fait d'une réduction de pression générée en association avec un écoulement de gaz inerte dans l'étape de fourniture de gaz inerte à un bain de fusion généré sur la surface du matériau métallique dans l'étape de chauffage, **caractérisé en ce que** :
la buse de soudage comprend :
un cylindre interne de buse (102) à travers lequel est distribué le gaz inerte, et
un cylindre externe de buse (104) à travers lequel l'atmosphère qui est aspirée est distribuée à travers un espace (g) avec le cylindre interne de buse tout en entourant un côté du cylindre interne de buse ;
dans l'étape de fourniture de gaz inerte, le gaz inerte est fourni au matériau métallique depuis l'intérieur du cylindre interne de buse ;
dans l'étape d'introduction d'oxygène, tandis que l'atmosphère qui est aspirée est distribuée à travers l'espace entre le cylindre interne de buse et le cylindre externe de buse, de l'oxygène dans l'atmosphère est introduit dans le bain de fusion ;
la buse de soudage comprend en outre une unité de variation d'espace qui peut régler la taille de l'espace entre le cylindre interne de buse et le cylindre externe de buse ; et
dans l'étape d'introduction d'oxygène, une quantité d'atmosphère qui est distribuée à travers l'espace entre le cylindre interne de buse et le cylindre externe de buse est contrôlée en réglant la taille de l'espace entre le cylindre interne de buse et le cylindre externe de buse avec l'unité de variation d'espace, et la quantité d'oxygène introduite dans le bain de fusion est ainsi contrôlée.

2. Procédé de soudage selon la revendication 1, dans lequel
la taille de l'espace entre le cylindre interne de buse et le cylindre externe de buse est supérieure à 1 mm mais de 5 mm ou moins.

3. Procédé de soudage, comprenant :
une étape de fourniture de gaz inerte consistant à fournir du gaz inerte à une surface d'un matériau métallique depuis l'intérieur d'une buse de soudage cylindrique (100d) ;
une étape de chauffage consistant à chauffer la surface du matériau métallique où le gaz inerte a été fourni par la buse de soudage dans l'étape de fourniture de gaz inerte ; et
une étape d'introduction d'oxygène consistant à introduire de l'oxygène dans l'atmosphère qui est aspiré du fait d'une réduction de pression générée en association avec un écoulement de gaz inerte dans l'étape de fourniture de gaz inerte à un bain de fusion généré sur la surface du matériau métallique dans l'étape de chauffage, **caractérisé en ce que** :
la buse de soudage comprend des trous d'introduction d'atmosphère (108) qui conduisent à l'intérieur de la buse de soudage depuis l'extérieur de la buse de soudage, et à travers lesquels l'atmosphère qui est aspirée est distribuée ;
dans l'étape d'introduction d'oxygène, tandis que l'atmosphère qui est aspirée est distribuée à travers les trous d'introduction d'atmosphère, de l'oxygène dans l'atmosphère est introduit dans le bain de fusion ;
la buse de soudage comprend en outre une unité de variation de trous d'introduction qui peut régler la taille des trous d'introduction d'atmosphère, et
dans l'étape d'introduction d'oxygène, la quantité de l'atmosphère qui est distribuée à travers les trous d'introduction d'atmosphère est contrôlée en réglant la taille des trous d'introduction d'atmosphère avec l'unité de variation des trous d'introduction, et la quantité d'oxygène introduite dans le bain de fusion est ainsi contrôlée.

4. Procédé de soudage selon l'une quelconque des revendications 1 à 3, dans lequel
dans l'étape d'introduction d'oxygène, de l'oxygène dans l'atmosphère est introduite dans le bain de fusion de sorte à permettre à la quantité d'oxygène dans le bain de fusion d'être de 70 ppm à 300 ppm.

5. Procédé de soudage selon l'une quelconque des revendications 1 à 4, dans lequel
dans l'étape de fourniture de gaz inerte, le gaz inerte est fourni en réglant un débit du gaz inerte à un débit de 1 LM à 9 LM.

6. Buse de soudage (100c) qui fournit du gaz inerte à une surface d'un matériau métallique depuis un intérieur d'une buse de soudage cylindrique, et qui est utilisée pour un soudage qui chauffe la surface du matériau métallique où le gaz inerte a été fourni par la buse de soudage, **caractérisée en ce que** la buse comprend :
un cylindre interne de buse (102) à travers lequel est distribué le gaz inerte, et
un cylindre externe de buse (104) à travers lequel l'atmosphère est aspirée du fait d'une réduction de pression générée en association avec un écoulement du gaz inerte qui est distribué à travers le cylindre de buse interne, l'atmosphère qui est aspirée étant distribuée à travers un espace avec le cylindre interne de buse tout en entourant un côté du cylindre interne de buse, et
une unité de variation d'espace qui peut régler la taille de l'espace entre le cylindre interne de buse et le cylindre externe de buse, dans laquelle :
de l'oxygène dans l'atmosphère est introduit dans un bain fusion généré sur la surface du matériau métallique du fait du chauffage par l'atmosphère qui est aspirée et distribuée ; et
une quantité d'atmosphère qui est distribuée à travers l'espace entre le cylindre interne de buse et le cylindre externe de buse est contrôlée en réglant la taille de l'espace entre le cylindre interne de buse et le cylindre externe de buse avec l'unité de variation d'espace, la quantité d'oxygène introduite dans le bain de fusion étant ainsi contrôlée.

7. Equipement de soudage, comprenant :
la buse de soudage selon la revendication 6,
une source de chaleur qui chauffe la surface du matériau métallique où le gaz inerte a été fourni par la buse de soudage,
l'unité de surveillance de bain de fusion qui surveille le bain de fusion, et
une unité de contrôle de quantité d'introduction d'oxygène qui contrôle une quantité d'oxygène introduite dans le bain de fusion par l'unité de variation d'espace de la buse de soudage, sur la base d'un état de l'unité de fusion surveillé par l'unité de surveillance de bain de fusion.

8. Buse de soudage (100d) qui fournit du gaz inerte à une surface d'un matériau métallique depuis l'intérieur d'une buse de soudage cylindrique, et qui est utilisée pour un soudage qui chauffe la surface du matériau métallique où le gaz inerte a été fourni par la buse de soudage, **caractérisée en ce que** la buse comprend :
des trous d'introduction d'atmosphère (108) qui conduisent à l'intérieur de la buse de soudage depuis l'extérieur de la buse de soudage, et à travers lesquels est distribuée l'atmosphère qui est aspirée du fait d'une réduction de pression générée en association avec un écoulement du gaz inerte qui est distribué à travers la buse de soudage, et
une unité de variation de trous d'introduction qui peut régler la taille des trous d'introduction d'atmosphère, dans laquelle :
de l'oxygène dans l'atmosphère est introduit dans un bain fusion généré sur la surface du matériau métallique du fait du chauffage en distribuant l'atmosphère qui est aspirée à travers les trous d'introduction d'atmosphère ; et
une quantité d'atmosphère qui est distribuée à travers les trous d'introduction d'atmosphère est contrôlée en réglant la taille des trous d'introduction d'atmosphère avec l'unité de variation de trous d'introduction, la quantité d'oxygène introduit dans le bain de fusion étant ainsi contrôlée.

9. Equipement de soudage, comprenant :
la buse de soudage selon la revendication 8,
une source de chaleur qui chauffe la surface du matériau métallique où le gaz inerte a été fourni par la buse de soudage,
l'unité de surveillance de bain de fusion qui surveille le bain de fusion, et
une unité de contrôle de quantité d'introduction d'oxygène qui contrôle une quantité d'oxygène introduite dans le bain de fusion par l'unité de variation de trous d'introduction de la buse de soudage, sur la base d'un état de l'unité de fusion surveillé par l'unité de surveillance de bain de fusion.
